(19) 

(11) **EP 4 696 499 B1**

(12) **EUROPEAN PATENT SPECIFICATION**

(45) Date of publication and mention of the grant of the patent:
**26.08.2026 Bulletin 2026/35**

(21) Application number: **25222060.3**

(22) Date of filing: **07.02.2025**

(51) International Patent Classification (IPC):
***B32B 5/02*** *(2006.01)* ***B32B 5/04*** *(2006.01)*
***B32B 5/06*** *(2006.01)* ***B32B 5/08*** *(2006.01)*
***B32B 5/26*** *(2006.01)* ***B32B 7/12*** *(2006.01)*

(52) Cooperative Patent Classification (CPC):
**B32B 5/267; B32B 5/022; B32B 5/04; B32B 5/06; B32B 5/08; B32B 5/26; B32B 7/12;** B32B 2250/20; B32B 2262/0207; B32B 2262/0253; B32B 2262/0276; B32B 2262/0292; B32B 2262/12; B32B 2262/14; B32B 2307/51; (Cont.)

(54) **METHOD FOR MANUFACTURING ELASTIC NONWOVEN LAMINATE COMPRISING MACHINE DIRECTION ORIENTED FIBERS**

VERFAHREN ZUR HERSTELLUNG EINES ELASTISCHEN VLIESSTOFFLAMINATS MIT IN MASCHINENRICHTUNG AUSGERICHTETEN FASERN

PROCÉDÉ DE FABRICATION D’UN STRATIFIÉ NON TISSÉ ÉLASTIQUE COMPRENANT DES FIBRES ORIENTÉES DANS LE SENS MACHINE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.02.2024 EP 24156711**

(43) Date of publication of application:
**18.02.2026 Bulletin 2026/08**

(62) Document number(s) of the earlier application(s) in accordance with Art. 76 EPC:
**25703587.3 / 4 673 315**

(73) Proprietors:
- **Fibertex Personal Care A/S**
  **9220 Aalborg (DK)**
- **Reifenhäuser GmbH & Co. KG Maschinenfabrik**
  **53844 Troisdorf (DE)**

(72) Inventors:
- **HANSEN, Morten Rise**
  **9220 Aalborg (DK)**
- **SOMMER, Sebastian**
  **53844 Troisdorf (DE)**
- **WOSCH, Niklas**
  **53844 Troisdorf (DE)**

(74) Representative: **Lorenz Seidler Gossel Part. mbB**
**Widenmayerstr. 23**
**80538 München (DE)**

(56) References cited:
**EP-B1- 2 098 363**
**WO-A1-2005/065932**
**WO-A1-2007/078344**
**WO-A1-2020/132009**
**WO-A2-2021/195157**
**US-A1- 2004 067 710**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2307/54; B32B 2307/718; B32B 2307/724;
B32B 2555/00; B32B 2555/02

## Description

### Field of the Invention

The present invention relates to a method for manufacturing an elastic nonwoven laminate comprising at least one facing layer comprising a nonwoven material and an elastic engine comprising elastic fibers that are substantially parallel and oriented substantially in the machine direction of the laminate.

### Background of the Invention

The production of modern baby diaper pants, femcare pants and adult incontinence pants has evolved to be more component-based in order to simplify the manufacturing process for higher efficiency and less complexity. A key step in the manufacturing process of diaper pants is the making of the elastic waist panel. This component should ensure that the diaper absorbent core is kept in place and be soft, thin and textile-like for good waring comfort.

Traditionally diaper elastic waist belts are made of two so-called facing layers, which are typically spunbond nonwovens of between 10 to 15 gsm basis weight, one facing layer facing the wearers skin and one facing layer facing outwards. An elastic engine is laminated in between the facing layers. The elastic engine can be composed of elastic strands often referred to as Spandex or Lycra strands.

The components of such laminates are typically gathered in line when manufacturing the diaper. Usually, during gathering, the elastic strands are pretensioned and an adhesive is applied, before being laminated with a facing layer on both sides. Alternative technologies of positioning and fixing the strands in the laminate without glue have also been developed and involve, for example, ultrasonic bonding, but the most common method is still with adhesive. As the elastic strands are under pretension during the lamination process, they will retract under less or no load and retract the facing layers with them. Thus, laminates having high elasticity in machine direction (MD) can be made, which at the same time are stable with relatively good tensile properties and have relatively low elongation properties in cross machine direction (CD). This is an important feature for a waist belt component as the wearer (or parent) is pulling in the CD direction as the diapers is put in place on the wearer.

There are certain disadvantages associated with the existing technology, however. Firstly, to ensure a good coverage of elastic force over the entire width of the elastic waist panel, a certain number of strands is required. Specifically, the distance between the strands shall typically be no more than 5-10 mm maximum. This result in a relatively high number of strands per waist panel, often up to 15-25 strands for baby diapers and up to 50 for adult incontinence diapers. Controlling the pretension and adhesive application of such a high number of closely adjacent strands often leads to difficulties in production and frequent shutdowns, considering that a product is rejected if only a single strand is missing. Secondly, even if spaced very narrow, the strands will concentrate the elastic force on the specific point of the elastic strand, this has a tendency of creating red markings on the wearer’s skin and can lead to discomfort. Thirdly, the facing layers bulk up in a relaxed or semi relaxed-state, once the diaper has been positioned on the wearer. Hence, the diaper will be somewhat bulky when placed in its position on the wearer, which increases its visibility underneath clothing. As discretion is a high priority in diapers, this is undesired. Hence, there is a need for new elastic materials that are cost efficient, sustainable and easy to convert, and that do not have the drawbacks listed above.

In the prior art, US 4,720,415 A discloses an elastic laminate with facing layers on one or both sides of an elastic engine, where the elastic engine consists of a meltblown nonwoven formed from elastic polmers. EP 4 373 450 A1 discloses a laminate with facing layers on one or both sides of an elastic engine, where the elastic engine consists of a spunbond nonwoven formed from elastic polmers, and where the elastic engine is pretensioned. US 5,385,775 A describes a laminate where the elastic engine consists of an elastomeric meltblown layer bonded to substantial parallel elastomeric filaments. At least one gatherable layer is joined at a spaced apart location. WO 2005/065932 A1 and WO 2007/078344 A1 show similar solutions as US 5,385,775 A, but with the addition of a film as an additional layer in the elastic engine. The patent families of EP 3 558 189 A1, EP 3 675 784 A1 and EP 3 810 054 A1 disclose laminates where the elastic engine is formed from multiple low denier strands that are parallel unrolled from warp beams. None of the solutions has been fully satisfactory.

### Summary of the Invention

To overcome the problems of the prior art, the present invention proposes methods for manufacturing an elastic nonwoven laminate comprising at least one facing layer comprising a nonwoven material and an elastic engine comprising elastic fibers that are substantially parallel and oriented substantially in the machine direction of the laminate (hereinafter also referred to as "elastic MDOF", standing for "elastic machine direction oriented fibers").

The laminate made by the method of the invention is characterized in that the elastic MDOF of the elastic engine are thin (i.e. much thinner than strands of traditional Spandex solutions) and abundant (i.e. more elastic fibers per meter of

laminate width than strands per meter of laminate width in traditional Spandex products).

A basis weight of the elastic engine, which is formed from the elastic MDOF, can be between 5 to 30 gsm (grams per square meter of laminate). In preferred embodiments, the basis weight of the elastic engine can be 10 to 25 gsm, or 15 to 20 gsm. Reference is made to the basis weight of the elastic engine when the laminate is in a relaxed, i.e. retracted state.

The MDOF are preferably extruded single filament fibers. In contrast, traditional products use elastic prefabricated threads that are unrolled from a beam. These prefabricated elastic threads, on a microscopic level, are multifilament threads that comprise a plurality of filaments formed into a thread. The possibility to have extruded single filaments with desirable properties in the product is a result of the method of the invention also described herein.

The basis weight is a product of the number of elastic MDOF per meter of laminate width and the denier/9000. In embodiments, in the laminates of the invention, the linear mass density of the elastic MDOF may be 300 denier (grams per 9000 m) or less, the number of elastic MDOF per meter of laminate width (in cross-machine direction) is 500 or more, or both. In preferred embodiments, the linear mass density of the elastic MDOF is 200 denier or less, 150 denier or less, 100 denier or less, or 75 denier or less. The number of elastic MDOF per meter of laminate width, in preferred embodiments, can be 1000 or more, 2000 or more, 3000 or more, or even 4000 or more. For comparison, in traditional Spandex solutions, linear mass densities of the strands are usually 400-1000 denier and strand numbers are 100-400 strands per meter of laminate width.

The method of the invention comprises: providing the nonwoven material; providing the elastic fibers; and laminating the elastic fibers to the nonwoven material to form the elastic nonwoven laminate; wherein providing the elastic fibers comprises extruding at least a thermoplastic elastomer polymer through multiple holes of a spinneret to form a curtain of extrusion spun polymer filaments and drawing them with a godet roll system.

## Detailed Description of the Invention

A key feature of the invention is the technology of providing the elastic MDOF, which is herein referred to as "direction spinning". It is a modified spunbonding process devoid of any diffusor or other processing equipment intended to change and distribute / randomize filament orientation. A godet roll system is used for controlled drawing of the filaments while maintaining their parallel orientation. Filament attenuation by a directed high-speed airflow, as in traditional spunbonding, is preferably absent or insignificant. The filaments cool down while drawn, in which course the polymer chains orient themselves in the length direction of the filament and slowly crystallize to form the solidified elastic MDOF. The crystallization / solidification can be influenced by factors like the polymer throughput per capillary, cooling level below the spinneret, distance from the spinneret to the godet roll system and godet roll speed. The parameters should be adjusted such that the polymer is substantially solidified and elastic after leaving the godet roll system. In embodiments, an optimal performance of process stability can be obtained for spinneret to godet distances of 1 to 3 meters, preferably 1,5 to 2,5 meters.

The laminates made according to the invention differ from prior art Spandex solutions not only in structure, i.e. fiber thickness and abundance, but also in properties. Specifically, the laminates more evenly distribute the retraction force, contributing to increased wearer comfort. They also require less material in terms of laminate basis weight for obtaining the same or even better physical properties, which again contributes to increased wearer comfort by making the diapers thinner. The reduced basis weight also means reduced material consumption and hence reduced cost and reduced environmental impact. The process does not suffer from the initially discussed problems of traditional Spandex processes and is more stable.

On the other hand, the laminates made according to the invention differ over prior art solutions, where the elastic engine is formed from traditional nonwoven materials comprising elastic fibers, such as EP 4 373 450 A1, by the strict machine directional orientation of the elastic MDOF. The lack of cross-machine directional elements in fiber orientation can be also expressed in terms of how many meters of a single endless fiber, on average, is contained in one meter laminate length (in machine direction). In laminates made according to the invention, the average length of the elastic MDOF in one meter length of laminate is hardly longer than one meter, for example less than 1,5 meters, less than 1,2 meters or even less than 1,1 meters. In contrast, in a traditional spunbond nonwoven, a single endless fiber in one meter fabric length typically has a length of greater 2 meters or even greater 3 meters, corresponding to significant cross-machine directional components in the average fiber orientation. The fact that the elastic MDOF are all substantially oriented in the machine direction ensures maximum utilization of the elastic performance of each single fiber. In contrast, in a traditional spunbond nonwoven, the fibers are, with purpose, randomly distributed in order to obtain an as isotropic product in respect of machine and cross-machine directional properties as possible.

As stated initially, the number of elastic MDOF per meter of laminate width can be 500 or more and, in preferred embodiments, can be 1000 or more, 2000 or more, 3000 or more, or even 4000 or more. These numbers lead to optimum product properties. The processes described herein make such fiber numbers possible in a procedurally stable and economically feasible manner. On the other hand, owing to operational stability in production and maintaining air permeability, the upper limit for the number of elastic MDOF per meter of laminate width can, in embodiments, be

10.000 or less, 8000 or less, 7000 or less, or 6000 or less.

The numbers of elastic MDOF per meter of laminate width given above lead to average center-to-center MDOF (fiber) spacing of 2 mm or less at 500 or more fibers/m(CD), 1 mm or less at 1000 or more fibers/m(CD), 0,5 mm or less at 2000 or more fibers/m(CD), 0,33 mm or less at 3000 or more fibers/m(CD) and 0,25 mm or less at 4000 or more fibers/m(CD). The average gap between fibers is even smaller owing to the lateral fiber dimension. For example, a 100 denier fiber typically has a diameter in the magnitude of approx. 0,1 mm, so for such fibers, the average gap between such fibers would be approx. 0,1 mm less than the average center-to-center fiber distance.

The MDOF are individualised, i.e. not systematically tangled or twisted. Preferably, the spacing is relatively even, with, for example, more than 70% of the MDOF at more than 90% of all machine-directional positions of a representative piece of at least 1 m machine-directional length of the elastic laminate being within 50% of the average cross-machine directional center-to-center spacing between the MDOF.

The godet roll system can comprise a single godet roll or multiple godet rolls. The rolls typically comprise a flat or mildly structured surface and are driven at a controllable speed. Especially in the case of a single roll, to generate sufficient contact to enable their function, it is preferred to have a minimum wrap-around angle of ≥30°, ≥45° or ≥60°. The roll temperature may be room temperature or may be controlled at a temperature below room temperature to enhance cooling. The surfaces of the rolls can be coated with inert materials like fluoropolymers to reduce stickiness.

Preferably, the elastic MDOF are in a prestretched state when laminated to the nonwoven material. The retraction force of the prestretched elastic MDOF leads to a machine-directional contraction of the bonded laminate. Depending on the nature of the nonwoven forming for the facing layer, this may lead to a finely pleated surface. The prestretch can greatly improve the elongation properties and elasticity profile in machine directional.

The prestretch can be controlled by a speed difference between the godet roll system and the line (speed of the nonwoven material and elastic MDOF when laminated, e.g. calender speed when laminated in a calender). The ratio of the line speed to godet speed can be, for example, 2 or greater, 3 or greater, or 4 or greater. On the other hand, if can be 10 or less, 8 or less, or 6 or less. In the case of more than one godet roll, the godet speed is the speed of the first godet roll, i.e. the one closest to the spinneret.

In embodiments, process stability can be best when the distance between the godet roll system and the point of lamination exceeds a certain minimum distance. The minimum distance can, for example, be 1 meter, 2 meters or 3 meters. Again, in the case of more than one godet roll, the reference point is the first godet roll, i.e. the one closest to the spinneret.

The laminating preferably comprises concurrent gathering and bonding together. A bonding right at gathering is advantageous especially when the MDOF are in a prestretched state to have maximum effect of the retraction force of the MDOF on the facing layer.

In a preferred embodiment, the elastic MDOF and the nonwoven material are concurrently gathered and bonded together in the nip of a pair of calender rolls. Calender bonding is common in hygiene industry and introduces bonding points into the laminate. The calender roll pair can comprise a pattern roll and a smooth roll, but can also be of another configuration like comprising two patterned rolls for bond-to-bond contact or two smooth rolls for areal bonding. Bonding conditions in terms of nip pressure and temperature of the calender may be optimised for the elastic MDOF to not destroy the elastic properties. They can be milder than ideal bonding conditions for a standard nonwoven material. Preferred temperatures can be 50-120°C, 60-110°C or 70-100°C. Preferred nip pressures can be 20-200 N/mm, 30-150 N/mm or 50-100N/mm.

The bonding pattern may generally be a standard pattern with 20-80 bonding points per $cm^2$ of the laminate, bonding point sizes of 0,2-5 $mm^2$ and/or bonding areas (% of laminate surface taken up by bonding points) of 5-30 %. Dot shapes may be round, oval, rectangular, diamond or rod. In an embodiment, substantially cross-machine directional rods such as those disclosed in WO 2017/148865 A1 can be preferred, as they promote higher tensile strength in CD over MD.

In a preferred embodiment, the laminating does not comprise using an adhesive and the elastic laminate is free of adhesive at least on the surface of the facing layer(s) that face the MDOF.

Using adhesives in the context of the present invention may disable the performance of the elastic laminates in terms of tensile and stretch properties, as an adhesive may hinder the ability of the MDOFs to expand and contract over their entire length, also outside defined bonding points. An adhesive may also reduce flexibility of the facing layers, add weight to the laminate and reduce air permeability of the laminate.

In embodiments, the nonwoven material of the facing layer is provided as an already bonded material. As mentioned above, ideal bonding conditions for the elastic MDOF are often milder than ideal bonding conditions for a standard nonwoven material and providing the nonwoven facing layer as an already bonded material allows for the bonding conditions in lamination to be optimised for the elastic MDOF without detriment to the physical properties of the facing layer.

In embodiments, the nonwoven material of the facing layer is provided by unwinding from a roll of prefabricated material.

Alternatively, the nonwoven material of the facing layer may also be provided as a precompacted but not already

bonded fibrous web, that is only bonded during lamination with the MDOF. In embodiments, such nonwoven material may be provided in an inline setup that comprises a sequence of a standard spunbonding machine and a directionspinning machine.

In embodiments, the nonwoven material of the facing layer is a relatively rigid material having an elongation @break of below 150%, below 120% or even below 100% in CD (WSP 110.4). A CD tensile @break of the facing layer can be at least 3 N/50/mm, at least 5 N/50mm or at least 10 N/50mm (WSP 110.4), depending on the material basis weigth. Although material rigidity is usually higher in MD than in CD, due to reservoirs formed by elastic MDOF retraction after bonding in the form of a fine pleat of such facing layer, the laminate can still have a high elastic stretch in MD, while the rigid material limits extensibility in CD. As explained initially, this is a desirable characteristic for diaper waist belt components.

In embodiments, the elastic laminates made according to the invention may have an elongation @break in MD that is higher than an elongation @break in CD. The factor can be at least 1,2, or at least 1,5, or even at least 2. In terms of absolute values, the elongation @break can be below 150%, below 120% or even below 100% in CD, and can be above 200%, above 250% or even above 300% in MD. The MD tensile @100% stretch can correspondingly be relatively low, for example, 1-20 N/50mm, preferably 2-15 N/50mm, more preferably 3-10 N/50mm. The values reported above in this paragraph are as measured according to WSP 110.4.

In embodiments, when the elastic laminates made according to the invention undergo tensile tests (WSP 110.4), an increase in slope can be observed at a certain value of stress in the MD stress-strain diagrams (stress on x-axis, strain on y-axis; stress corresponds to elongation, strain to tensile force). The value corresponds to the elongation where a material reservoir in the facing layer formed by elastic MDOF retraction after bonding is exhausted. The value is the so-called knee value, and is understood herein as elongation value where the curvature of the stretch curve (WSP 110.4) increases with 0,4 N per 1% elongation. In embodiments, the knee value can be between 70-300%, 80-250%, or 90-200% elongation.

In an embodiment, the nonwoven material of the facing layer comprises a spunbond material. More specifically, the spunbond material comprised by the facing layer may be made of monocomponent fibers or bicomponent fibers having a symmetric cross-section. Such spunbond materials are typically rigid in the sense as defined above. The facing layer may also be a laminate itself, for example a SMS, meaning spunbond-meltblown-spunbond laminate nonwoven material. In another embodiment, the spunbond material may be made of crimped fibers that are bicomponent fibers having an asymmetric cross-section. Such materials are typically lofty and soft and exhibit higher elongation in both machine and cross-machine direction. While such materials will not usually allow obtaining laminates have an elongation-at-break in MD that is higher than an elongation-at-break in CD, the materials may be soft and pleasant to wear on the skin. In embodiments, spunbonded materials used as a facing layer can be pre-bonded, for example by calendaring or air-through bonding. In embodiments, the facing layer can also comprise staple fiber nonwovens, such as carded nonwovens or air-laid nonwovens.

In embodiments, the laminates have only one facing layer on one side of the elastic engine, and no further facing layer on the other side of the elastic engine. The process of the invention makes it possible to form such materials in a stable manner, which can have less layers, less basis weight and higher air permeability than three-layer materials. Such two-layer materials may be better suitable for some kinds of further material processing into end products than three-layer materials.

In other embodiments, the laminates can have two facing layers, one facing layer on either side of the elastic engine. Such materials can have higher stability and better suitability for other methods of further material processing. Both facing layers can comprise one or more nonwoven materials. The above description of nonwoven materials applies to both facing layers individually. The facing layers can be the same or different. Different facing layers or different nonwoven materials in a facing layer can be preferred to combine advantageous properties of different types of nonwoven materials. For example, a laminate having a lofty and soft spunbond material in one facing layer and a more rigid spunbond nonwoven material in the same or an opposite facing layer, desirable elongation-at-break in CD can be combined with desirable softness and touch. In general terms, laminates made according to the invention can, for example, be S-D-S, S-S-D-S, S-S-D-S-S, S-M-D-S, S-M-S-D-S-M-S, S-M-S-D-S, S-M-S-D, S-D, or S-S-D, or similar, where S stands for a spunbond layer, M stands for a meltblown layer, and D stands for the directionspun layer of MDOF. In each case, the S may be a $S_{BiCo}$ or $S_{MoCo}$, where $S_{BiCo}$ stands for a soft and lofty spunbond layer of crimped or uncrimped multicomponent fibers and $S_{MoCo}$ stands for a more rigid spunbond layer of linear monocomponent fibers. Laminates can also have two or more layers of MDOF in sequences like S-D-D-S, S-D-D, S-S-D-D, or S-D-S-D-S. Alternatively, in other embodiments, also films can be used for one of the facing layers.

For making laminates comprising more than two layers, the method of the invention can comprise concurrently laminating three or more of the layers. For example, nonwoven materials of two facing layers and the MDOF can be concurrently laminated. Alternatively, further layers can be laminated in a separate step. For example, MDOF and nonwoven material of a first facing layer can be laminated in one step and nonwoven material of the second facing layer added in a separate step. Like the laminating of the MDOF and nonwoven material, the separate step can comprise prestretching the existing laminate before laminating the further facing layer or nonwoven material, and can comprise

concurrent gathering and bonding together, preferably in a calender. The separate step can be an inline or an offline step.

The elastic MDOF are formed, at least in part, from a thermoplastic elastomer. Examples comprise thermoplastic polyolefins (TPE-o), e.g. comprising propylene-$\alpha$-olefin copolymers, thermoplastic polyurethanes (TPU) or styrenic block copolymers (TPE-s). The thermoplastic elastomer may comprise additives such as regular thermoplastic polyolefins or slip agents to improve physical properties and process stability. Suitable slip agents comprise unsaturated fatty acid derivatives, such as oleamide or erucamide. Suitable thermoplastic polyolefins comprise polyethylene, polypropylene-polyethylene copolymer and polypropylene. Total additives can be present, for example, in an amount of greater 1 wt% or 2 wt% up to 10 wt% or 20 wt%. Slip agents can be present, for example, in an amount of greater 0.1 wt% or 0.2 wt% up to 1 wt% or 2 wt%.

In one embodiment, the MDOF are monocomponent fibers formed from the thermoplastic elastomer. In an alternative embodiment, the MDOF may also be bicomponent fibers having a symmetric sheath-core configuration, where the core comprises the thermoplastic elastomer and the sheath comprises a regular (non-elastic) thermoplastic polymer. A sheathing of regular thermoplastic polymer may reduce stickiness of the elastic MDOF and improve its bonding behaviour. The regular thermoplastic polymer may be a polyethylene, a polypropylene-polyethylene copolymer or a polypropylene.

The basis weight of each facing layer, in a relaxed state of the laminates, can be between 5-100, preferably 10-80, more preferably between 15-60 gsm. Of course, any facing layer, after having been contracted by the retraction force of the elastic MDOF in the elastic laminate, will have a proportionally increased basis weight in the laminate versus the starting material, i.e. its basis weight times the retraction ratio of the elastic engine, which can be 120% or more, 150% or more, 200% or more, 250% or more, or 300% or more. The starting material, i.e. the facing layer(s) as provided and laminated with the elastic MDOF, can have a basis weight of, for example, 2-25 gsm, preferably 3-20 gsm. In embodiments, a low basis weight facing layer of 2-6 gsm or 3-5 gsm can be preferred. In embodiments, the facing layer(s) in their relaxed state are of essentially homogenous basis weight over their entire area and, for example, do not comprise a pattern of areas with different basis weights. The only pattern in the fiber structure of such facing layer(s) in the elastic laminate are the gathers resulting from the MDOF retraction and, if any, bonding points from calendaring. The overall basis weight of the laminate can be between 10-200, preferably 20-160, more preferably between 30-120 gsm for a laminate with one facing layer, or between 15-300, preferably 30-240, more preferably between 45-180 gsm for a laminate with two facing layers.

The elastic nonwoven laminates made according to the invention may be used in the manufacture of hygiene articles or medical articles. In particular, the elastic nonwoven laminates made according to the invention may be suitable for use in the manufacture of baby diaper pants, femcare pants or adult incontinence pants comprising the laminate as an elastic waist belt. The elastic nonwoven laminates made according to the invention can also be used in any other hygiene or medical article comprising an elastic component, however. Examples comprise bandages, gowns and drapes.

## Brief Description of the Figures

Further details and advantages of the invention are described in the following with reference to exemplary embodiments and figures. The figures show:

Fig. 1: A traditional spunbonding machine.

Fig. 2: A machine for directionspinning and making elastic MDOF in a method of the invention.

Fig. 3: A process setup for making an elastic nonwoven laminate of the invention, having one facing layer.

Fig. 4: A process setup for making an elastic nonwoven laminate of the invention, having two facing layers.

Fig. 5 Another process setup for making an elastic nonwoven laminate of the invention, having one facing layer.

Fig. 6a-c: Stress-strain hysteresis curves for different inventive and comparative samples.

Fig. 7 An illustration showing the knee value in a schematic stress-strain diagram.

Fig. 8a-c Stress-strain hysteresis curves for further inventive samples.

Fig. 9 A stress-relaxation plot for another inventive sample.

## Standard spunbonding (prior art)

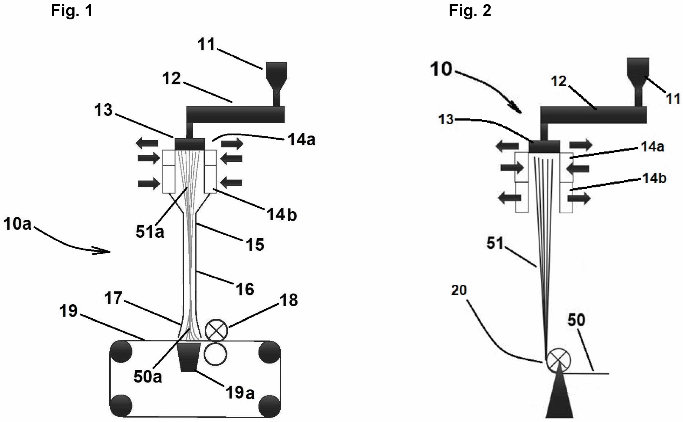

A machine 10a for traditional spunbonding is illustrated in Fig. 1. Thermoplastic polymers from a feed system 11

are provided to an extruder 12, heated and extruded through a spinneret 13 to form a curtain of filaments 51a. A ventilation system 14a draws monomer exhaust air from the spinneret 13 and a process air system 14b, including a pressurized cabin, directs process air to the curtain of filaments 51a. The process air typically enters through a honeycomb system in order to have a good air distribution, to stabilize the curtain of filaments 51a and to facilitate equal cooling and subsequent drawing of all filaments 51a. Subsequent to the process air system 14b, the filaments 51a and process air enter a stretching channel, comprising a so-called intermediate channel 15 and so-called SAS plates 16 for drawing and attenuating them. In intermediate channel 15, the air speed is increased, and the SAS plates 16 have an accurate position and precise distance, ensuring an equal airflow and drawing behaviour across the width of the machine. During the drawing and further cooling, the polymer chains within the filaments 51a are oriented in the length direction of the filaments and slowly crystalize, resulting in an increased tenacity in each single resulting fiber. Subsequently, the thus finally stretched endless fibers 50a enter a diffusor 17, also referred to as the distribution unit. Here, the airspeed and thereby the fiber speed is reduced and controlled to generate a turbulence that will randomize the orientation of the fibers 50a. The combined fiber and air stream exiting the diffusor 17 is directed onto a movable and air-permeable spinbelt 19 for fiber laydown and the formation of a fibrous web. The web is consolidated by a pair of consolidation rolls 18. The process air is suctioned off by a suctioning unit 19a located below the spinbelt 19. The speed of the fibers 50a exiting the diffusor 17 is higher than the travelling speed of the spinbelt 19, contributing to their random orientation not only in the airstream, but also in the web, with large proportions oriented in cross-machine direction. The ratio of speeds can be at least two-fold or at least three fold, with the speed ratio corresponding approximately to the average length of the endless fibers per one meter product length.

Directionspinning

A modified machine 10 for direction spinning and making the elastic MDOF in a method of the invention is illustrated in Fig. 2. As in traditional spunbonding, thermoplastic polymers from a feed system 11 are provided to an extruder 12, heated and extruded through a spinneret 13 to form a curtain of filaments 51. Further as in traditional spunbonding, a ventilation system 14a draws monomer exhaust air from the spinneret 13 and a process air system 14b, including a pressurized cabin, directs process air to the curtain of filaments 51.

As compared to traditional spunbonding, however, the speed and back-pressure of the cooling air is significantly reduced. An exemplary value can be a 50% reduction in cooling air flow rate as compared to traditional spunbonding, with a corresponding drop in back pressure by approximately 90%. As the cooling air generation is responsible for grossly half of the energy consumption of a traditional spunbonding machine (the other grossly half being the melting of the polymers and all line drives), this is very significant. In other words, the directionspinning leads to a reduced energy consumption. In further contrast to traditional spunbonding, the aerodynamic devices for stretching the filaments, comprising the intermediate channel and the SAS plates, and, most importantly, for randomizing the fiber orientation, comprising the diffusor, are omitted. Process cooling air entering at 14a will flow downwards to the process air suction at 14b or exit upwards through the monomer suction at the spinneret 13. While guide plates for controlling a residual airflow in the area below the process air system 14b can be present for improving process stability, such guide plates are distanced sufficiently to not lead to a significant increase in the speed of the flow of process air and shaped to not lead to significant turbulence. Rather, the filaments 51 are drawn mechanically by a godet roll system, which in the illustrated setup consists of a single godet roll 20 with a wrap-around angle of approx. 90°.

The godet roll 20 is driven at a certain speed and can have a controlled surface temperature. The combination of distance between godet roll 20 and spinneret 13, godet roll speed in relation to spinning capillary diameter and material throughput in the spinneret 13, material choice, godet roll surface temperature, size and surface structure can be determinant of MDOF properties like basis weight, elasticity and tensile properties.

In terms of process parameters, the number and position of capillaries in the spinneret 13 is of importance. The number of capillaries can be from 1000-10.000 capillaries per cross-machine directional meter of the spinneret 13, for example. Preferred capillary numbers per cross-machine directional meter, to obtain optimum product parameters, comprise 2000 or more, 3000 or more, or 4000 or more and, on the other hand, in the interest of operational stability, 8000 or less, 7000 or less, or 6000 or less. A cross-machine directional spacing between as many of the individual capillaries as possible is highly preferred to avoid agglomeration of filaments 51. Standard spunbonding spinnerets often comprise capillaries arranged in multiple machine directional lines staggered in cross-machine direction. For using such spinneret in directionspinning, the spinneret 13 be rotated around a vertical axis for a small angle, e.g. 2°, to tilt the lines of capillaries out of the machine direction. Alternatively, the capillaries can also be randomly distributed.

Exemplary process setups

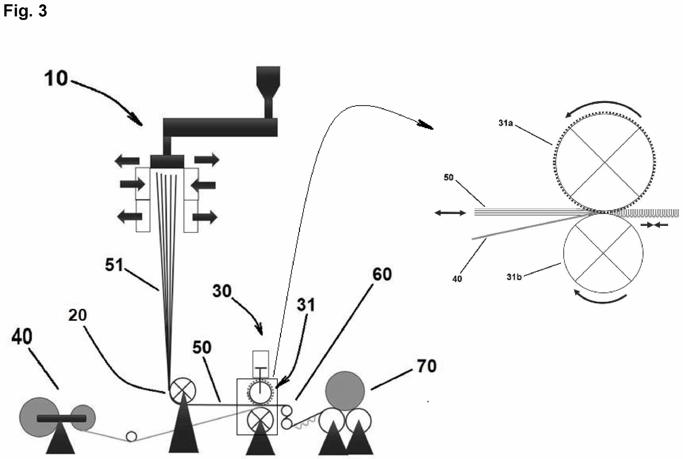

Fig. 3 shows a process setup for making an elastic nonwoven laminate according to the invention, which has an elastic engine 50 and a single facing layer 40. The setup comprises a directionspinning machine 10 as per Fig. 2 and uses a prefabricated spunbond sheet 40 that is unwound from a roll. The prefabricated facing layer 40 is laminated to the elastic

MDOF 50 in a calender 30, more specifically in the nip of a pair of calender rolls 31. The laminate then proceeds through cooling rolls 60 and is wound up to form a material roll at winding station 70.

The calender rolls comprise a structured roll 31a and a flat roll 31b, which are rotated in opposite direction. The rolls 31a, 31b act on the combined sheet by a certain linear pressure in the magnitude of, e.g., 40 N/mm and the embossing projections are heated to a temperatures of, e.g., 90°C, facilitate local polymer melting upon contact and the embossing of bonding points.

The speed of the godet roll 20 is smaller than the speed of the calender rolls 31, such that the elastic MDOF 50, which are already essentially solid and crystallized upon exiting the godet roll 20, are fed to the nip in a pretensioned state. The degree of pretensioning depends, next to an elastic versus a still viscous behaviour of the MDOF, the distance of the godet roll 20 to calender 30, and the absolute speed of godet roll 20 and calender 30, in particular on the ratio of the line (calender) speed to godet speed. Preferred ratios can be 4-6, for example. In contrast, the facing layer 40 is fed to the nip of the calender rolls 31 without pretension or with smaller pretension than the elastic MDOF 50.

The pretensioning of the elastic MDOF can lead to laminates to have high elasticity, especially in machine direction. Specifically, after the calender 30, the tensioning force is released and the elastic MDOF are allowed to retract. For that purpose, winding speed at winding station 70 is kept at a level that is significantly below the calender speed. The facing layer 40 will be pulled short by the elastic retraction force of the elastic directionspun fibers. Depending on the material choice, it may show a fine pleat and/or change in internal structure. In any case, the facing layer 40 will have a reservoir for machine directional stretch up to the point where the layer is stretched to its normal machine directional length, without contraction by pulling short.

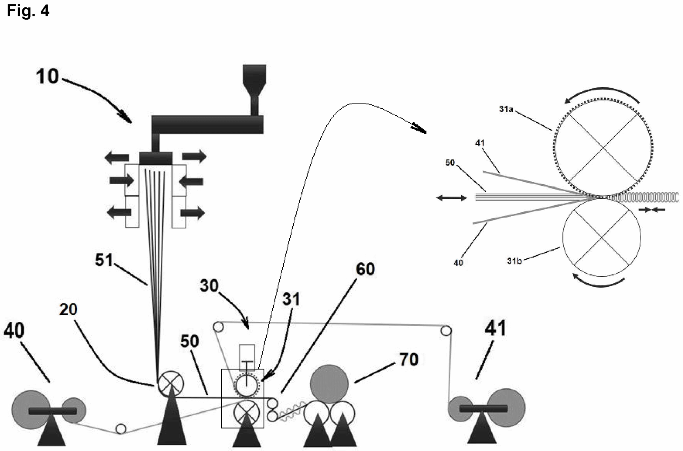

Fig. 4 shows a process setup for making an elastic nonwoven laminate according to the invention, which has two facing layers 40, 41, one on each side of the elastic engine 50. The different between the setup of Fig. 3 lies in second a prefabricated spunbond sheet 41 provided by unwinding from a material roll and concurrently laminated to the other side of the elastic MDOF 50 in the calender 30. The spunbond sheet 41 can be the same or different than the spunbond sheet 40. It is likewise fed to the calender 30 without pretension or with smaller pretension than the elastic MDOF 50.

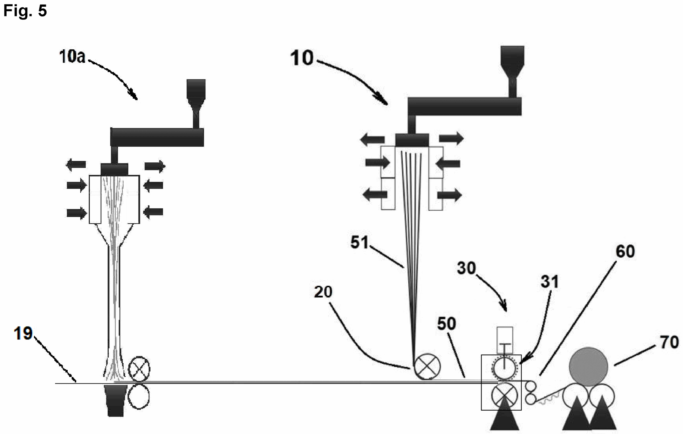

Fig. 5 shows another process setup for making an elastic nonwoven laminate of the invention, having one facing layer. It comprises an inline sequence of a machine 10a for traditional spunbonding, as illustrated in Fig. 1, and a machine 10 for directionspinning, as illustrated in Fig. 2. Compared to the setup of Fig. 3, a difference lies in the inline manufacturing of the facing layer, which is laminated to the elastic MODF in the form of a precompacted but not already bonded fibrous web, and concurrently bonded at lamination and bonding to the elastic MDOF in the calender 30.

Laminates having an elastic engine and a soft and flexible facing layer

For producing highly flexible laminates, elastic MDOF were combined with a spunbond facing layer of highly crimped fibers. Specifically, for the facing layer, a combination of PP with a CoPP in a side-by-side structure as disclosed, for example, in EP 4 180 018 A1, was to generate a highly crimped facing layer with elongation @break of beyond 200% in machine direction (elongation @break is the maximum elongation the material can reach undergoing a stretch test WSP 110.4 before breaking at its maximum tensile peak). The process setup was as in Fig. 5.

Tables 1-3 summarize the composition, process setup and physical data for different laminate samples according to the invention, samples 1-7, and comparative samples that were made without godet and feeding the MDOF to the calender directly (sample 8) or with a single layer traditional elastic fiber spunbonded nonwoven instead of the laminate of the flexible nonwoven and MDOF as elastic engine (sample 9).

In all samples, for the direction spinning, a 1,1-meter-wide spin beam of Reicofil 4 type with 3500 capillaries was used. The godet roll is an aluminum roll with a diameter of approx. 150 mm and operated at room temperature. The calender is operated at 80°C and a linear pressure of 60 N/mm.

Table 1

| Sample | Crimped Fiber Layer A | | MDOFLElastic Layer B | |
|---|---|---|---|---|
| | Polymer A | Polymer B | Polymer | Additive |
| 1 | 80% 511A | 20% QR674K | 94% 6202 | 6% 5124 |
| 2 | 80% 511A | 20% QR674K | 94% 6202 | 6% 5124 |
| 3 | 80% 511A | 20% QR674K | 94% 6202 | 6% 5124 |
| 4 | 73% 511A | 27% QR674K | 94% 6202 | 6% 5124 |
| 5 | 70% 511A | 30% QR674K | 94% 6202 | 6% 5124 |
| 6 | 70% 511A | 30% QR674K | 94% 6202 | 6% 5124 |
| 7 | 70% 511A | 30% QR674K | 94% 6202 | 6% 5124 |
| 8 | 70% 511A | 30% QR674K | 94% 6202 | 6% 5124 |
| 9 | 94% 7050 / 6% 5124 | - | - | - |

Table 2

| Sample | Processing speeds | | | | |
|---|---|---|---|---|---|
| | Throughput MDOF (kg/h) | Line speed (m/min) | Godet speed (m/min) | Speed ratio line/godet | Winder speed (m/min) |
| 1 | 95 | 51 | 20 | 2,55 | 46 |
| 2 | 95 | 51 | 30 | 1,7 | 52 |
| 3 | 57 | 30 | 28 | 1,07 | 32 |
| 4 | 57 | 51 | 30 | 1,7 | 54 |
| 5 | 57 | 51 | 25 | 2,04 | 54 |
| 6 | 57 | 51 | 30 | 1,7 | 54 |
| 7 | 57 | 80 | 30 | 2,66 | 79 |
| 8 | 57 | 51 | - | - | 58 |
| 9 | | 51 | - | - | 58 |

Table 3

| Sample | Total BW (gsm) | BW Layer A (gsm) | BW Layer B (gsm) | TSMD (@break) (N/50mm) | TEMD (@break) (%) | TSCD (@break) (N/50mm) | TECD (@break) (%) |
|---|---|---|---|---|---|---|---|
| 1 | 72 | 36 | 36 | 31,0 | 298 | 10,8 | 185 |
| 2 | 64 | 36 | 36 | 22,3 | 287 | 9,7 | 193 |
| 3 | 83 | 52 | 31 | 21,5 | 196 | 13,6 | 203 |
| 4 | 52 | 32 | 20 | 19,2 | 259 | 9,6 | 256 |
| 5 | 62 | 38 | 24 | 18,7 | 255 | 9,3 | 228 |
| 6 | 50 | 31 | 21 | 20,9 | 255 | 9,7 | 266 |
| 7 | 47 | 29 | 18 | 18,5 | 262 | 7,9 | 215 |
| 8 | 36 | 22 | 14 | 16,2 | 155 | 5,8 | 263 |
| 9 | 41,1 | 41,1 | - | 13,7 | 279 | 7,9 | 368 |

The facing layer A in each sample is formed from highly crimped fibers based on a regular narrow molecular weight distributed PP spunbond grade 511A from Sabic and a broader molecular weight distributed CoPP also from Sabic. The MFR of the 511A is 25 g/10 min and the MFR of the QR674K is 40 g/min (ISO 1133, 230°C, 2,16 kg). The polymer in layer is spun in a continuous side-by-side arrangement in ratios between 70-80% of 511A and 30-20% of the QR674K, respectively. With these ratios a good and aggressive crimp is achieved, ensuring that the facing layer as made in layer A has a high extensibility and is not preventing the elastic performance of the elastic engine in stretching and retracting. Besides the material choice for the components in the side-by-side arrangement, the fibers are processed in a traditional manner, meaning cooling and attenuating by high speed process air and passing through a diffusor for a uniform distribution, as explained in more detail in connection with Fig. 1.

The MDOF of elastic engine B are composed of Vistamaxx 6202, a CoPP elastomer from the company ExxonMobil, and a processing aid in the form of the additive Constab Consoft 5124 (the additive has a 10% erucamide content and 90% regular, i.e. non-elastomeric homo-PP as a carrier). The elastic engine is processed according to the description of Fig. 2. Hence, the filaments are cooled in an open process utilizing volumes of cooling at low back pressure. No air is used to attenuate the filaments, but instead they are drawn and attenuated by the speed by the subsequent processing step, specifically the godet unit. The filaments are thereby all oriented substantially in the machine direction and not exposed to a diffusor or any other processing step that will try and distribute the filaments in another direction than the machine direction.

In the resulting laminates, the facing layer A has good extensibility and the elastic engine of elastic MDOF leads to good MD elastic performance.

A purpose of an elastic laminate made according to the invention is its elasticity in machine direction, in other words its capability to stretch and retract in machine direction. Typical machine directional stretching ratios for use in waist belts of products like baby pant diapers and adult incontinence pants presently are 100-120%, meaning a product with a length of 100 mm should be able to machine directionally stretch to 200-240 mm and retract subsequently. A suitable test method to determine the machine directional elastic performance of the laminates is described in ASTM D5459. Stretch-and-retract cycles of this method can be analyzed in a stress-strain diagram, where hysteresis curves are recorded. Specifically, a tensile force at a given stretch is recorded all the way up to a certain elongation (e.g., 100%). After the elongation is reached, the retraction cycle is started and again the tensile force at any stretch is recorded. A hysteresis of as close to 0% difference in workload in the upwards cycle compared to the retraction cycle is preferred. A so-called permanent set describes the inability of the material to retract all the way back to 0% elongation. If a given material reaches a tensile force of 0N at 10% stretch in the retraction cycle, then material has a permanent set of 10%. Ideally, the permanent set shall be as close to 0% as possible.

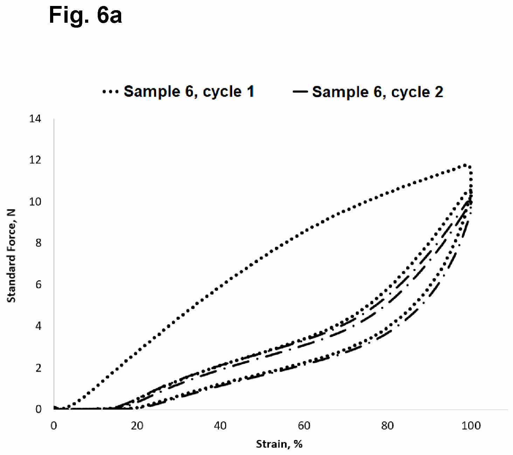

Fig. 6a shows a hysteresis cycle for sample 6. Two stretch-and-retraction cycles are shown. In the first cycle, the curve shows the tensile force over the elongation from 0-100% and is a representation of a so-called activation of the

laminate. Specifically, as the laminate is bonded together by calender bond points, some of the non-bonded areas are opened and activated during the first stretch. Thus, the stretch curve in the first cycle shows significantly higher strain values than the stretch curve in the second cycle. For the same reason, the hysteresis is poor in the first cycle and there is some degree of permanent set (probably 18%), whereas in the second cycle, for the already activated material, the hysteresis has improved a lot and the permanent set reduces to approx. 5%.

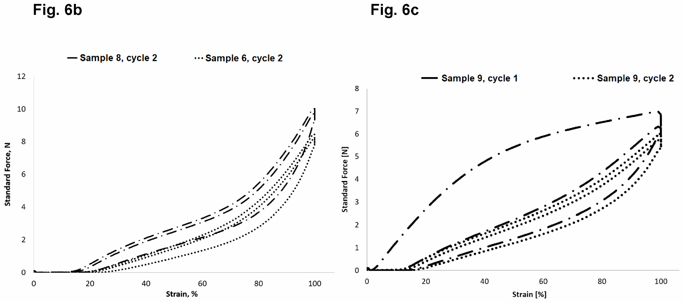

An impact of processing the MDOF without godet is exemplified in Fig. 6b, where hysteresis data for the second cycles of inventive sample 6 and comparative sample 8 are shown. In sample 8, due to the absence of a godet system, the MDOF are laminated with the crimped fiber layer A without any pretension. The impact is that the tensile force during the upwards cycle is delayed and the overall tensile force is lower. Hence, the prestretch has a positive impact on generating a higher tensile forces early in the stretch phase. This is important in the use of the material in, for example, a pant diaper product, as the product may otherwise appear sluggish.

An impact of machine directional fiber orientation in the elastic engine versus random orientation can be seen in the comparison between the inventive samples and comparative sample 9. As a working hypothesis, it can be assumed that an elastic fiber that is oriented in a random orientation will contribute less to the machine directional elastic performance of the material during the stretch process than a machine directionally oriented fiber, and the overall performance will be better if all the elastic fibers are oriented in machine direction. Vistamaxx 7050 is a CoPP elastomer from the company ExxonMobil, Constab Consoft 5124 is the same as defined above. In the data of Table 3, it is confirmed that comparative sample 9 has an inferior performance in terms of tensile strength. This is particularly emphasized in machine direction @100% stretch, as apparent in the hysteresis curve of that comparative sample, which is shown in Fig. 6c. TSMD @100% stretch is approx. 6,5 N/50mm. In comparison, sample 6 has approx. 10 N/50mm (Fig. 6a) at about half the basis weight of the elastic engine (21 gsm in sample 6 versus 41 gsm in sample 9). This means that the efficiency gain for TSMD @100% stretch is about three-fold.

As mentioned initially, it is for materials of elastic waist belts of diapers to be at the same time elastic in the machine direction and strong and resilient in the cross-machine direction. In all samples 1-7 of Tables 1-3, the cross-machine directional tensile strength is relatively low and the cross-machine directional elongation is relatively high. The materials hence have nice stretching properties in machine direction, but are not per se ideal for the use as a waist belt in a pant diaper product. To compensate for these deficits, a second facing layer acting as a reinforcement layer could be added, for example offline as shown for facing layer 41 in Fig. 4, or in a separate process, where the laminate of one of samples 1-7 is stretched and a reinforcement layer, for example a spunbond material with good cross-machine directional tensile properties, is laminated against the elastic laminate. The separate step can be done inline or offline, on a customer end at a pant manufacturing process.

Laminates having an elastic engine and two low elongation facing layers

For producing laminates with high elasticity in machine direction and low elongation in cross-machine direction, elastic MDOF are combined with two facing layers of low basis weight SMS material, that is spunbond-meltblown-spunbond laminate material. These facing layers have a low elongation @break of less than 100% in cross-machine direction. The process setup was as in Fig. 4.

Tables 4-7 summarize the composition, process setup and physical data for different laminate samples according to the invention, samples 10-20.

In all samples, for the directionspinning, a 1,1-meter-wide spin beam of Reicofil 4 type with 3500 capillaries was used. The godet roll is an aluminum roll with a diameter of approx. 150 mm and operated at room temperature. The calender is operated at 80°C and a linear pressure of 60 N/mm. After the calender the tension is reduced to 15N/m and the winder speed is recorded.

Table 4

| Sample | Facing layers | | MDOFLElastic Layer B | | |
|---|---|---|---|---|---|
| | Facing layer 1 | Facing layer 2 | Polymer 1 | Polymer 2 | Additive |
| 10 | 7 gsm SMS | 14 gsm SMS | 77% G1643VS | 17% 6202 | 6% 5124 |
| 11 | 7 gsm SMS | 14 gsm SMS | 77% G1643VS | 17% 6202 | 6% 5124 |
| 12 | 7 gsm SMS | 14 gsm SMS | 77% G1643VS | 17% 6202 | 6% 5124 |
| 13 | 7 gsm SMS | 14 gsm SMS | 77% G1643VS | 17% 6202 | 6% 5124 |
| 14 | 7 gsm SMS | 14 gsm SMS | 77% G1643VS | 17% 6202 | 6% 5124 |
| 15 | 7 gsm SMS | 14 gsm SMS | 77% G1643VS | 17% 6202 | 6% 5124 |
| 16 | 7 gsm SMS | 7 gsm SMS | 77% G1643VS | 17% 6202 | 6% 5124 |
| 17 | 7 gsm SMS | 7 gsm SMS | 77% G1643VS | 17% 6202 | 6% 5124 |
| 18 | 7 gsm SMS | 7 gsm SMS | 77% G1643VS | 17% 6202 | 6% 5124 |
| 19 | 7 gsm SMS | 7 gsm SMS | 77% G1643VS | 17% 6202 | 6% 5124 |
| 20 | 7 gsm SMS | 7 gsm SMS | 77% G1643VS | 17% 6202 | 6% 5124 |

Table 5

| Sample | Processing speeds | | | | | |
|---|---|---|---|---|---|---|
| | Throughput MDOF (kg/h) | Line speed (m/min) | Godet speed (m/min) | Speed ratio line/godet | Winder speed (m/min) | Speed ratio line/winder |
| 10 | 106 | 100 | 24 | 4,2 | 45 | 2,2 |
| 11 | 106 | 130 | 24 | 5,4 | 55 | 2,4 |
| 12 | 106 | 160 | 24 | 6,7 | 59 | 2,7 |
| 13 | 106 | 120 | 30 | 4,0 | 64 | 1,9 |
| 14 | 106 | 160 | 30 | 5,3 | 75 | 2,1 |
| 15 | 106 | 160 | 40 | 4,0 | 94 | 1,7 |
| 16 | 84 | 100 | 25 | 4,0 | 50 | 2,0 |
| 17 | 84 | 130 | 25 | 5,2 | 58 | 2,3 |
| 18 | 105 | 160 | 30 | 5,3 | 67 | 2,4 |
| 19 | 140 | 160 | 40 | 4,0 | 82 | 2,0 |
| 20 | 140 | 210 | 40 | 5,3 | 93 | 2,3 |

Table 6

| Sample | Total BW (gsm) | BW Facing Layers (gsm) | BW MDOF Layer (gsm) | TSMD (@break) (N/50mm) | TEMD (@break) (%) | TSCD (@break) (N/50mm) | TECD (@break) (%) |
|---|---|---|---|---|---|---|---|
| 10 | 95 | 55,3 | 39,4 | 68,6 | 315 | 60,1 | 79,1 |
| 11 | 101 | 68,5 | 32,5 | 55,0 | 285 | 70,1 | 78,7 |
| 12 | 108 | 77,6 | 30,1 | 42,1 | 378 | 80,0 | 82,2 |
| 13 | 81 | 52,4 | 28,1 | 62,2 | 237 | 51,1 | 76,2 |
| 14 | 85 | 60,9 | 24,0 | 56,0 | 276 | 60,7 | 78,3 |
| 15 | 70 | 50,9 | 19,1 | 64,9 | 233 | 50,6 | 75,7 |
| 16 | 69 | 40,1 | 28,6 | 49,7 | 271 | 36,6 | 88,5 |
| 17 | 73 | 47,9 | 24,9 | 41,5 | 313 | 42,4 | 93,3 |
| 18 | 74 | 47,7 | 26,5 | 41,8 | 333 | 46,2 | 92,8 |
| 19 | 74 | 45,5 | 28,7 | 49,6 | 281 | 37,2 | 84,1 |
| 20 | 72 | 45,9 | 25,6 | 40,0 | 307 | 43,4 | 88,2 |

Table 7

| Sample | Knee value (%) | TSMD (@100%) (N/50mm) | TSMD (@100%) per basis weight (N/50mm per gsm) | Knee value multiplied by TSMD (@100%) per basis weight ((N/50mm per gsm)*%) |
|---|---|---|---|---|
| 10 | 130 | 5,8 | 0,15 | 19,1 |
| 11 | 165 | 5,7 | 0,18 | 28,9 |
| 12 | 200 | 4,4 | 0,15 | 29,2 |
| 13 | 100 | 6,9 | 0,25 | 24,5 |
| 14 | 145 | 5,0 | 0,21 | 30,2 |
| 15 | 90 | | | |
| 16 | 120 | 4,6 | 0,16 | 19,3 |
| 17 | 160 | 4,0 | 0,16 | 25,7 |
| 18 | 170 | 3,9 | 0,15 | 25,0 |
| 19 | 115 | 4,2 | 0,15 | 16,8 |
| 20 | 160 | 3,7 | 0,14 | 23,1 |

Using pre-made facing layers has the advantage that it is possible to engineer the exact facing layer needed in order to fulfill specific customer requirements. In samples 10-20, the facing layers were low basis weight SMS materials of 7 gsm and 14 gsm, respectively, or 7 gsm and 7 gsm, respectively, for good optical coverage.

The MDOF in all samples consisted of 77% SEBS Kraton G1643VS in a blend with 17% Vistamaxx 6202 (TPE-o coPP from Exxon Mobile) and 6% Constab Consoft 5124. For best process stability and product performance, it has been found that a blend of SEBS (Styrene Ethylene/Butylene Styrene) and TPE-o (olefin-block copolymers) in combination with an erucamide-based slip additive and another processing aid like PP. A throughput of 106 kg/h translates to a throughput per hole of approx. 0,50 g/hole/min.

The recorded winder speeds are significantly lower than the line speeds, which indicates that the elastic filaments have retracted.

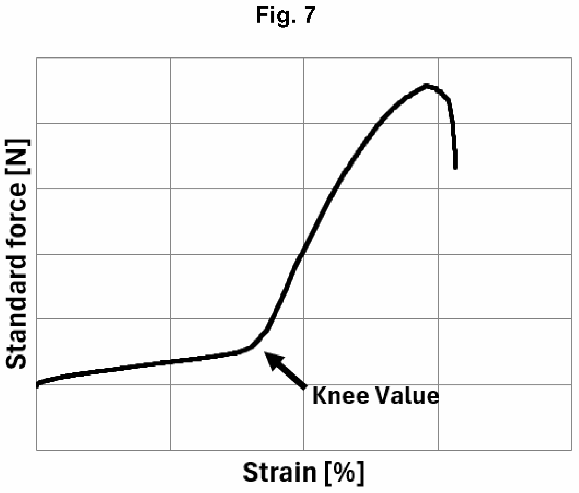

For all the samples, a knee value can be recorded. This value corresponds to a stress value in the stress-strain curve (WSP 110.4), where the slope starts exceeding with 0,4 N per 1%. Fig. 7 illustrates the location of the knee value in a hypothetical stress-strain diagram, which would approximately have the shape of MD stress-strain diagrams for laminates of the invention. It corresponds approximately to the point where a material reservoir in the facing layers formed by elastic MDOF retraction after bonding is exhausted.

Samples 10-20 show an influence of throughput, godet speed and line speed to product performance.

If the godet speed is kept constant at 24 m/min and the line speed is increased from 100 m/min (sample 10) to 130 m/min (sample 11) to 160 m/min (sample 12), the prestretch of the MDOF and hence the knee value increases from 130% (sample 10) to 165% (sample 11) to 200% (sample 12). At the same time, however, due to increased contraction, the resultant basis weight of the material increases from 95 gsm (sample 10) to 101 gsm (sample 11) to 108 gsm (sample 12) and TSMD @100% decreases from 5,8 N/50mm (sample 10) to 5,7 N/50mm (sample 11) to 4,4 N/50mm (sample 12). The TSMD per basis weight of elastic MDOF indicates the elastic performance per basis weight of elastic engine. As an indication of the combined product performance per basis weight, the knee value can be multiplied TSMD @100% and divided by the basis weight of the elastic engine. Samples 11 and 12 perform on about an equal level.

In samples 13-15, the godet speed is increased to 30 m/min and 40 m/min, respectively, and line speed is varied form 120 m/min to 160 m/min. The observed trend is the same as with the initial three options. At a constant godet speed of 30 m/min, increasing the line speed from 120 to 160 /min leads to an increased knee value (100% in sample 13, 145% in sample 14). At the same time, TSMD @100% relatively high for sample 13 with less prestretch of the MDOF (6,9 N/50mm) and lower for sample 14 with more prestretch of the MDOF (5,0 N/50mm). Sample 15 with the even higher godet speed of 40 m/min and line speed of 160m/min led to a decrease in knee value to 90% in the given setup.

In sample 16, the throughput is set to 84 kg/h, which equals approx. 0,40 g/hole/min. The godet speed is 25 m/min and the line speed is 100 m/min. The obtained laminate has a TSMD @100% of 4,6 N/50mm and a knee value of 120 %. In sample 17, the throughput and godet speed are the same, but the line speed is increased to 130 m/min. Here, TSMD @100% is reduced to 4,0 N/50mm, whereas the knee value is increased to 160%. Starting from sample 17, adjusting the throughput to reference level of 0,5 g/hole /min as in sample 18, and correspondingly increasing godet speed to 30 m/min and line speed to 160 m/min, leads to materials having very similar TSMD @100% (3,9 N/50mm) and knee value (170%). Increasing the throughput further to 140 Kg/h, which equals 0,67 g/hole/min, as in sample 19, and correspondingly increasing the godet speed to 40 m/min, but keeping the line speed constant, leads to slightly increased TSMD @100% (4,2 N/50mm), but at lower knee value (115 %). If also the line speed is correspondingly increased to 210 m/min, as in samples 20, TSMD @100% is again reduced (3,7 N/50mm), but the knee value is increased (160%).

Hence, the throughput, godet speed and line speed are key process parameters for controlling the product performance.

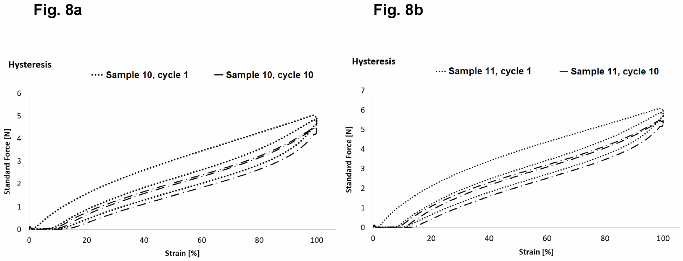

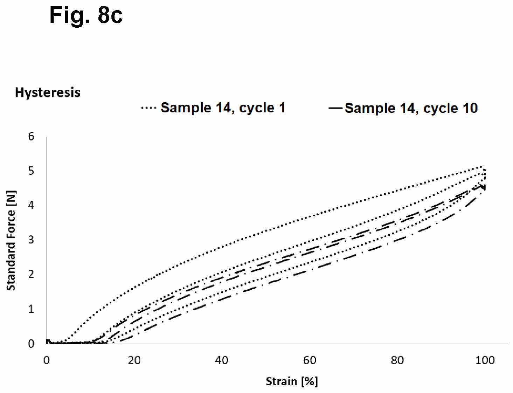

Hysteresis data of sample 10 are displayed in Fig. 8a, of sample 11 in Fig. 8b and for sample 14 in Fig. 8c. Specifically, Fig. 8a-8c each illustrate a hysteresis of the first cycle and a hysteresis of the tenth cycle. Data for the first through tenth cycles for each of samples 10, 11 and 14 are illustrated in Table 8 below.

Table 8

| Sample | Cycle | | | | | | | | | |
|---|---|---|---|---|---|---|---|---|---|---|
| | 1 | 2 | 3 | 4 | 5 | 6 | 7 | 8 | 9 | 10 |
| 10 | 37,71 | 24,39 | 23,48 | 22,73 | 22,70 | 22,63 | 22,83 | 22,06 | 21,77 | 21,94 |
| 11 | 36,71 | 23,39 | 24,32 | 23,40 | 24,15 | 24,00 | 24,11 | 22,54 | 24,18 | 22,13 |
| 14 | 39,32 | 25,85 | 25,30 | 25,30 | 24,93 | 24,29 | 23,79 | 23,84 | 24,71 | 23,49 |

Generally, only a relatively minor deviation is noted between the first and tenth cycles for each sample, and the curves are generally very similar. This means that the materials with pleated facing layers (samples 20-20) do not require the same kind of activation as materials with soft facing layers (samples 1-7).

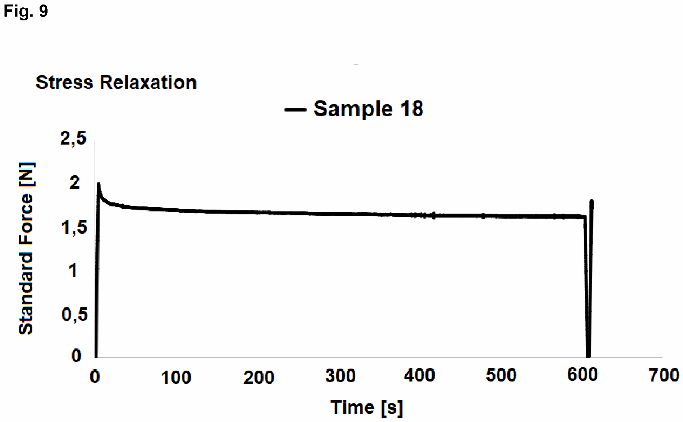

Elastic performance over time, also referred to as stress relaxation, is shows for sample 18 in Fig. 9. The test is performed according to ASTM D5459 and at 50% machine directional elongation, the cycle stops and the position is held for 10 minutes. The machine directional tensile force is measure continuously during this period. Due to the dynamics of the test cycle, a drop in tensile is seen immediately after the 50% elongation is achieved, but this drop is flattening out after the first couple of seconds. Overall, the drop in force over the period is 0,3781 N with a peak force of 1,97 N resulting in a stress relaxation of 19,2 %

Peel strength (or delamination) is tested to assess the resistance of the materials to delamination. Sample 17 was selected for testing. In the test, the two facing layers on a 50 mm wide test piece are manually separated to a certain extent and each of the separated lose ends, which are still connected in a non-separated part of the laminate, are inserted into upper and lower clamps of a tensile force tester and the clamps are driven in opposite direction. The speed of the test head is 305 mm/min. The force is measured and the maximum force is recorded. The maximum force recorded is 1,91 N/50 mm in machine direction and 4,44 N/50mm in cross-machine direction. Both values are representative of good adhesion of the layers.

**Claims**

**1.** A method for manufacturing an elastic nonwoven laminate, the method comprising:

providing a nonwoven material;
providing a plurality of elastic fibers that are substantially parallel and that are oriented substantially in a machine direction; and
laminating the elastic fibers to the nonwoven material to form an elastic nonwoven laminate comprising the nonwoven material as a facing layer (40, 41) and the elastic fibers as an elastic engine (50);
wherein providing the elastic fibers comprises extruding at least a thermoplastic elastomer polymer through multiple holes of a spinneret (13) to form a curtain of extrusion spun polymer filaments (51) and drawing them with a godet roll system (20).

**2.** . The method of claim 1, wherein the method further comprises:

providing a second nonwoven material; and
wherein the laminating comprises laminating both nonwoven materials to the elastic fibers to form an elastic nonwoven laminate comprising the elastic fibers as an elastic engine (50) and the nonwoven materials as a facing layers (40, 41) on either side of the elastic engine (50).

**3.** . The method of any one of claims 1-2, wherein the elastic fibers are in a prestretched state when laminated to the nonwoven material(s), wherein preferably a ratio of the speed of the nonwoven material and elastic fibers when laminated to the speed of the godet roll system (20) is 2-10, preferably 3-8, more preferably 4-6.

**4.** . The method of any one of claims 1-3, wherein the laminating comprises concurrent gathering and bonding together, preferably in a calender (30).

**5.** . The method of any one of claims 1-4, wherein the nonwoven material is provided as an already bonded material; and/or wherein the provided nonwoven material or at least one of the provided nonwoven materials has an elongation @break of below 150%, preferably below 120%, more preferably below 100% in cross-machine direction (WSP 110.4).

**6.** . The method of any one of claims 1-5, wherein the thermoplastic elastomer comprises a slip agent, preferably in an amount of 0,1-2 wt%, more preferably 0,2-1 wt.%, wherein the slip agent is preferably an unsaturated fatty acid, such as oleamide or erucamide.

**7.** . The method of any one of claims 1-6, wherein the elastic nonwoven laminate manufactured by the method comprises: at least one facing layer (40, 41) comprising a nonwoven material; and an elastic engine (50) comprising elastic fibers that are substantially parallel and that are oriented substantially in a machine direction of the elastic nonwoven laminate; wherein the elastic fibers are extruded single filament fibers and the basis weight of the elastic engine is 5 to 30 gsm, preferably 10 to 25 gsm, more preferably 15 to 20 gsm.

**8.** . The method of claim 7, wherein the linear mass density of the elastic fibers of the elastic nonwoven laminate manufactured by the method is 300 denier or less, preferably 200 denier or less, more preferably 150 denier or less, yet more preferably 100 denier or less, and yet more preferably 75 denier or less; and/or wherein the number of elastic fibers per meter of width of the elastic nonwoven laminate manufactured by the method in cross-machine direction is 1000 or more, preferably 2000 or more, more preferably 3000 or more, and yet more preferably 4000 or more.

**9.** . The method of any one of claims 7-8, wherein the elastic nonwoven laminate manufactured by the method has an elongation @break in machine direction (WSP 110.4) that is higher than an elongation @break in cross-machine direction (WSP 110.4), preferably at least 1,2 times higher, more preferably at least 1,5 times higher, and yet more preferably at least 2 times higher.

**10.** . The method of any one of claims 7-9, wherein the elastic nonwoven laminate manufactured by the method has an elongation @break in machine direction (WSP 110.4) above 200%, preferably above 250%, more preferably above 300%; and/or an elongation @break in cross-machine direction (WSP 110.4) of below 150%, preferably below 120%, more preferably below 100%; and/or a tensile strength in machine direction @100% stretch (WSP 110.4) of 1-20 N/50mm, preferably 2-15 N/50mm, more preferably 3-10 N/50mm.

**11.** . The method of any one of claims 7-10, wherein the elastic nonwoven laminate manufactured by the method has a machine directional knee value in the MD stress-strain diagram (WSP 110.4) of 70-300% elongation, preferably 80-250% elongation, more preferably 90-200% elongation.

**12.** . The method of any one of claims 7-11, wherein the nonwoven material of the facing layer (40, 41) of the elastic nonwoven material manufactured by the method comprises a spunbond material, preferably made of monocomponent or symmetric cross-section bicomponent fibers.

**13.** . The method of any one of claims 7-12, wherein the elastic nonwoven laminate manufactured by the method has a facing layer (40) comprising a nonwoven material on only one side of the elastic engine (50) or on either side of the elastic engine (50).

**14.** . The method of any one of claims 7-13, wherein the elastic nonwoven laminate manufactured by the method comprises a pattern of calender bonding points, or is free of adhesive at least on the surface of the facing layer(s) (40, 41) that face the elastic engine (50), or both.

## Patentansprüche

1. Verfahren zur Herstellung eines elastischen Vliesstofflaminats, wobei das Verfahren umfasst:

   Bereitstellen eines Vliesstoffmaterials;
   Bereitstellen einer Vielzahl elastischer Fasern, die im Wesentlichen parallel sind und die im Wesentlichen in einer Maschinenrichtung ausgerichtet sind; und
   Laminieren der elastischen Fasern mit dem Vliesstoffmaterial, um ein elastisches Vliesstofflaminat zu bilden, das das Vliesstoffmaterial als Deckschicht (40, 41) und die elastischen Fasern als elastische Einheit (50) umfasst;
   wobei das Bereitstellen der elastischen Fasern das Extrudieren zumindest eines thermoplastischen Elastomerpolymers durch mehrere Öffnungen einer Spinndüse (13) umfasst, um einen Vorhang aus extrusionsgesponnenen Polymerfilamenten (51) zu bilden, und das Verstrecken derselben mit einem Godetwalzensystem (20).

2. Verfahren nach Anspruch 2, wobei das Verfahren ferner umfasst:

   Bereitstellen eines zweiten Vliesstoffmaterials; und
   wobei das Laminieren das Laminieren beider Vliesstoffmaterialien mit den elastischen Fasern umfasst, um ein elastisches Vliesstofflaminat zu bilden, das die elastischen Fasern als elastische Einheit (50) und die Vliesstoffmaterialien als Deckschichten (40, 41) auf beiden Seiten der elastischen Einheit (50) umfasst.

3. Verfahren nach einem der Ansprüche 1-2, wobei die elastischen Fasern sich beim Laminieren mit dem/den Vliesstoffmaterial(ien) in einem vorgestreckten Zustand befinden, wobei vorzugsweise ein Verhältnis der Geschwindigkeit des/der Vliesstoffmaterials/-materialien und der elastischen Fasern beim Laminieren zur Geschwindigkeit des Godetwalzensystems (20) 2-10 beträgt, vorzugsweise 3-8, stärker vorzugsweise 4-6.

4. Verfahren nach einem der Ansprüche 1-3, wobei das Laminieren ein gleichzeitiges Gathern und Verbinden miteinander umfasst, vorzugsweise in einem Kalander (30).

5. Verfahren nach einem der Ansprüche 1-4, wobei das Vliesstoffmaterial als bereits verbundenes Material bereitgestellt wird; und/oder wobei das bereitgestellte Vliesstoffmaterial oder zumindest eines der bereitgestellten Vliesstoffmaterialien eine Bruchdehnung von unter 150 %, vorzugsweise unter 120 %, stärker vorzugsweise unter 100 % in Querrichtung (WSP 110.4) aufweist.

6. Verfahren nach einem der Ansprüche 1-5, wobei das thermoplastische Elastomer ein Gleitmittel umfasst, vorzugsweise in einer Menge von 0,1-2 Gew.-%, stärker vorzugsweise 0,2-1 Gew.-%, wobei das Gleitmittel vorzugsweise eine ungesättigte Fettsäure ist, wie Oleamid oder Erucamid.

7. Verfahren nach einem der Ansprüche 1-6, wobei das mit dem Verfahren hergestellte elastische Vliesstofflaminat umfasst: zumindest eine Deckschicht (40, 41) umfassend ein Vliesstoffmaterial; und eine elastische Einheit (50) umfassend elastische Fasern, die im Wesentlichen parallel sind und die im Wesentlichen in einer Maschinenrichtung des elastischen Vliesstofflaminats ausgerichtet sind; wobei die elastischen Fasern extrudierte Einzelfilamentfasern sind und das Flächengewicht der elastischen Einheit 5 bis 30 g/m$^2$, vorzugsweise 10 bis 25 g/m$^2$ , weiter vorzugsweise 15 bis 20 g/m$^2$ beträgt.

8. Verfahren nach Anspruch 7, wobei die lineare Massendichte der elastischen Fasern 300 Denier oder weniger ist, vorzugsweise 200 Denier oder weniger, stärker vorzugsweise 150 Denier oder weniger, noch stärker vorzugsweise 100 Denier oder weniger, und noch stärker vorzugsweise 75 Denier oder weniger; und/oder wobei die Anzahl der elastischen Fasern pro Meter Laminatbreite in Querrichtung 1000 oder mehr, vorzugsweise 2000 oder mehr, weiter vorzugsweise 3000 oder mehr, und noch weiter vorzugsweise 4000 oder mehr beträgt.

9. Verfahren nach einem der Ansprüche 7-8, wobei das elastische Vliesstofflaminat eine Bruchdehnung in Maschinenrichtung (WSP 110.4) aufweist, die höher ist als eine Bruchdehnung in Querrichtung (WSP 110.4), vorzugsweise zumindest 1,2-mal höher, stärker vorzugsweise zumindest 1,5-mal höher, und noch stärker vorzugsweise zumindest 2-mal höher.

10. Verfahren nach einem der Ansprüche 7-9, wobei das elastische Vliesstofflaminat eine Bruchdehnung in Maschinenrichtung (WSP 110.4) von über 200 % aufweist, vorzugsweise über 250 %, stärker vorzugsweise über 300 %; und/oder eine Bruchdehnung in Querrichtung (WSP 110.4) von unter 150 %, vorzugsweise unter 120 %, stärker

vorzugsweise unter 100 %; und/oder eine Zugfestigkeit in Maschinenrichtung bei 100 % Dehnung (WSP 110.4) von 1-20 N/50 mm, vorzugsweise 2-15 N/50 mm, stärker vorzugsweise 3-10 N/50 mm.

**11.** Verfahren nach einem der Ansprüche 7-10, wobei das elastische Vliesstofflaminat einen Kniepunktwert in Maschinenrichtung im MD-Spannungs-Dehnungs-Diagramm (WSP 110.4) von 70-300 % Dehnung, vorzugsweise 80-250 % Dehnung, stärker vorzugsweise 90-200 % Dehnung aufweist.

**12.** Verfahren nach einem der Ansprüche 7-11, wobei das Vliesstoffmaterial der Deckschicht (40, 41) ein Spinnvliesmaterial umfasst, vorzugsweise hergestellt aus Monokomponentenfasern oder Bikomponentenfasern mit symmetrischem Querschnitt.

**13.** Verfahren nach einem der Ansprüche 7-12, wobei das elastische Vliesstofflaminat eine Deckschicht (40) umfassend ein Vliesstoffmaterial nur auf einer Seite der elastischen Einheit (50) oder auf beiden Seiten der elastischen Einheit (50) aufweist.

**14.** Verfahren nach einem der Ansprüche 7-13, wobei das elastische Vliesstofflaminat ein Muster von Kalandrier-Bindepunkten aufweist, oder zumindest auf der/den Oberfläche(n) der Deckschicht(en) (40, 41), die der elastischen Einheit (50) zugewandt sind, frei von Klebstoff ist, oder beides.

## Revendications

**1.** Un procédé de fabrication d'un stratifié non-tissé élastique, le procédé comprenant : fournir un matériau non-tissé ;

fournir une pluralité de fibres élastiques qui sont sensiblement parallèles et qui sont orientées sensiblement dans une direction machine; et
stratifier les fibres élastiques avec le matériau non-tissé pour former un stratifié non-tissé élastique comprenant le matériau non-tissé en tant que couche de parement (40, 41) et les fibres élastiques en tant que moteur élastique (50);
dans lequel la fourniture des fibres élastiques comprend l'extrusion d'au moins un polymère élastomère thermoplastique à travers plusieurs trous d'une filière de filage (13) pour former un rideau de filaments polymères filés par extrusion (51) et leur étirage au moyen d'un système de rouleaux godets (20).

**2.** Le procédé selon la revendication 1, dans lequel le procédé comprend en outre:

fournir un second matériau non-tissé; et
dans lequel la stratification comprend la stratification des deux matériaux non-tissés avec les fibres élastiques pour former un stratifié non-tissé élastique comprenant les fibres élastiques en tant que moteur élastique (50) et les matériaux non-tissés en tant que couches de parement (40, 41) de part et d'autre du moteur élastique (50).

**3.** Le procédé selon l'une quelconque des revendications 1-2, dans lequel les fibres élastiques sont dans un état pré-étiré lorsqu'elles sont stratifiées avec le(s) matériau(x) non-tissé(s), dans lequel, de préférence, un rapport de la vitesse du/des matériau(x) non-tissé(s) et des fibres élastiques lors de la stratification à la vitesse du système de rouleaux godets (20) est de 2-10, de préférence 3-8, plus préférablement 4-6.

**4.** Le procédé selon l'une quelconque des revendications 1-3, dans lequel la stratification comprend un fronçage (gathering) et une liaison ensemble simultanés, de préférence dans un calandre (30).

**5.** Le procédé selon l'une quelconque des revendications 1-4, dans lequel le matériau non-tissé est fourni en tant que matériau déjà lié; et/ou dans lequel le matériau non-tissé fourni ou au moins l'un des matériaux non-tissés fournis présente un allongement à la rupture inférieur à 150 %, de préférence inférieur à 120 %, plus préférablement inférieur à 100 % en direction transversale (WSP 110.4).

**6.** Le procédé selon l'une quelconque des revendications 1-5, dans lequel l'élastomère thermoplastique comprend un agent de glissement, de préférence en une quantité de 0,1-2 % en poids, plus préférablement 0,2-1 % en poids, dans lequel l'agent de glissement est de préférence un acide gras insaturé, tel que l'oléamide ou l'érucamide.

**7.** Le procédé selon l'une quelconque des revendications 1-5, dans lequel le stratifié non tissé élastique fabriqué selon

ce procédé comprend: au moins une couche de parement (40, 41) comprenant un matériau non-tissé; et un moteur élastique (50) comprenant des fibres élastiques qui sont sensiblement parallèles et qui sont orientées sensiblement dans une direction machine du stratifié non-tissé élastique; dans lequel les fibres élastiques sont des fibres monofilament extrudées et le grammage du moteur élastique est de 5 à 30 g/m$^2$, préférablement de 10 à 25 g/m$^2$, plus préférablement de 15 à 20 g/m$^2$.

**8.** Le procédé selon la revendication 7, dans lequel la densité linéique des fibres élastiques est de 300 deniers ou moins, de préférence 200 deniers ou moins, plus préférablement 150 deniers ou moins, encore plus préférablement 100 deniers ou moins, et encore plus préférablement 75 deniers ou moins ; et/ou dans lequel le nombre de fibres élastiques par mètre de largeur de stratifié en direction transversale est de 1000 ou plus, de préférence 2000 ou plus, de plus préférence 3000 ou plus, encore plus, de préférence 4000 ou plus.

**9.** Le procédé selon l'une quelconque des revendications 7-8, dans lequel le stratifié non-tissé élastique présente un allongement à la rupture en direction machine (WSP 110.4) supérieur à un allongement à la rupture en direction transversale (WSP 110.4), de préférence au moins 1,2 fois supérieur, plus préférablement au moins 1,5 fois supérieur, et encore plus préférablement au moins 2 fois supérieur.

**10.** Le procédé selon l'une quelconque des revendications 7-9, dans lequel le stratifié non-tissé élastique présente un allongement à la rupture en direction machine (WSP 110.4) supérieur à 200 %, de préférence supérieur à 250 %, plus préférablement supérieur à 300 % ; et/ou un allongement à la rupture en direction transversale (WSP 110.4) inférieur à 150 %, de préférence inférieur à 120 %, plus préférablement inférieur à 100 % ; et/ou une résistance à la traction en direction machine à 100 % d'étirement (WSP 110.4) de 1-20 N/50 mm, de préférence 2-15 N/50 mm, plus préférablement 3-10 N/50 mm.

**11.** Le procédé selon l'une quelconque des revendications 7-10, dans lequel le stratifié non-tissé élastique présente une valeur de genou en direction machine dans le diagramme contrainte-déformation MD (WSP 110.4) de 70-300 % d'allongement, de préférence 80-250 % d'allongement, plus préférablement 90-200 % d'allongement.

**12.** Le procédé selon l'une quelconque des revendications 7-11, dans lequel le matériau non-tissé de la couche de parement (40, 41) comprend un matériau spunbond, de préférence fabriqué à partir de fibres monocomposant ou de fibres bicomposant à section transversale symétrique.

**13.** Le procédé selon l'une quelconque des revendications 7-12, dans lequel le stratifié non-tissé élastique présente une couche de parement (40) comprenant un matériau non-tissé sur un seul côté du moteur élastique (50) ou sur chaque côté du moteur élastique (50).

**14.** Le procédé selon l'une quelconque des revendications 7-13, dans lequel le stratifié non-tissé élastique comprend un motif de points de liaison par calandrage, ou est exempt d'adhésif au moins sur la/les surface(s) de la/des couche(s) de parement (40, 41) faisant face au moteur élastique (50), ou les deux.

Fig. 1
11
12
13
14a
14b
10a
51a
15
16
17
18
19
50a
19a
Fig. 2
10
12
11
13
14a
14b
51
20
50

Fig. 3

10
51
20
40
50
30
31
60
70
31a
50
40
31b

Fig. 4

10
51
20
40
50
30
31
60
70
41
31a
41
50
40
31b

Fig. 5

10a
10
51
30
31
60
20
50
19
70

# Fig. 6a

Sample 6, cycle 1
Sample 6, cycle 2
Standard Force, N
Strain, %
0
2
4
6
8
10
12
14
0
20
40
60
80
100

Fig. 6b
Sample 8, cycle 2
Sample 6, cycle 2
Standard Force, N
Strain, %
Fig. 6c
Sample 9, cycle 1
Sample 9, cycle 2
Standard Force [N]
Strain [%]

Fig. 7

Standard force [N]
Knee Value
Strain [%]

Fig. 8a
Hysteresis
Sample 10, cycle 1
Sample 10, cycle 10
Standard Force [N]
Strain [%]
0
1
2
3
4
5
6
0
20
40
60
80
100
Fig. 8b
Hysteresis
Sample 11, cycle 1
Sample 11, cycle 10
Standard Force [N]
Strain [%]
0
1
2
3
4
5
6
7
0
20
40
60
80
100

# Fig. 8c

Hysteresis
Sample 14, cycle 1
Sample 14, cycle 10
Standard Force [N]
Strain [%]
0
1
2
3
4
5
6
0
20
40
60
80
100

Fig. 9

Stress Relaxation
— Sample 18
Standard Force [N]
2,5
2
1,5
1
0,5
0
0
100
200
300
400
500
600
700
Time [s]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4720415 A
- EP 4373450 A1
- US 5385775 A
- WO 2005065932 A1
- WO 2007078344 A1
- EP 3558189 A1
- EP 3675784 A1
- EP 3810054 A1
- WO 2017148865 A1
- EP 4180018 A1